(19) **Europäisches Patentamt**

**European Patent Office**

**Office européen des brevets**

(11) **EP 0 488 010 B1**

(12) **EUROPÄISCHE PATENTSCHRIFT**

(45) Veröffentlichungstag und Bekanntmachung des Hinweises auf die Patenterteilung:
**05.02.1997 Patentblatt 1997/06**

(51) Int. Cl.$^6$: **B32B 27/32**, B65D 65/40

(21) Anmeldenummer: **91119636.8**

(22) Anmeldetag: **18.11.1991**

(54) **Metallisierbare Dreheinschlagsfolie aus biaxial orientiertem Polypropylen**

Metalizable twist-wrap film of biaxially oriented polypropylene

Feuille d'enveloppement metalisable en polypropylène orienté biaxiallement

(84) Benannte Vertragsstaaten:
**BE DE ES FR GB IT NL**

(30) Priorität: **24.11.1990 DE 4037417**

(43) Veröffentlichungstag der Anmeldung:
**03.06.1992 Patentblatt 1992/23**

(73) Patentinhaber: **HOECHST AKTIENGESELLSCHAFT 65926 Frankfurt am Main (DE)**

(72) Erfinder:
• **Peiffer, Herbert, Dr.**
  **W-6500 Mainz-Finthen (DE)**
• **Murschall, Ursula, Dr.**
  **W-6505 Nierstein (DE)**
• **Schlögl, Gunter, Dr.**
  **W-6233 Kelkheim (DE)**

(56) Entgegenhaltungen:
EP-A- 0 217 388     EP-A- 0 348 749
US-A- 4 343 852

• **Saunders, Organic Polymer Chemistry, Seite 56**

Bemerkungen:
Die Akte enthält technische Angaben, die nach dem Eingang der Anmeldung eingereicht wurden und die nicht in dieser Patentschrift enthalten sind.

## Beschreibung

Die vorliegende Erfindung betrifft eine mehrschichtige coextrudierte transparente und metalliserbare Folie für den Dreheinschlag mit isotropen mechanischen Eigenschaften, die in der Basisschicht ein niedrigmolekulares Kohlenwasserstoffharz und ein Antistatikum und in den Deckschichten ein Antiblockmittel enthält. Die Folie ist in den Deckschichten frei von Gleitmittel. Die Erfindung betrifft ferner ein Verfahren zur Herstellung solcher Folien und ihre Verwendung.

Die metallisierbare Dreheinschlagsfolie ist eine Variante der transparenten Ausführungsform. Auf der hochglänzenden metallisierbaren Oberfläche der Dreheinschlagsfolie wird Metall aufgedampft, worauf später die Bedruckung erfolgt. Der Einschlag erhält auf diese Weise sein sehr attraktives werbewirksames Aussehen, sowohl von innen als auchvon außen. Von außen besticht z.B. der Druck durch eine stark erhöhte Farbbrillianz, innen vermittelt die silbrigglänzende Metallschicht den Eindruck hoher Hygiene.

Nach dem Stand der Technik sind Folien mit guten Dreheigenschaften, gut metallhaftenden Oberflächen und noch gutem Verarbeitungsverhalten auf schnelllaufenden Dreheinschlagsmaschinen nicht bekannt.

So werden beispielsweise in den Druckschritten GB-A-12 31 861, DE-A-35 35 472 und EP-A-0 317 276 transparente Folien für den Dreheinschlag beschrieben. Die Folien sind im Drehverhalten verbesserungswürdig und eine Metallhaftung ist nicht gegeben.

In DE-A-35 35 472 werden keine isotropen Folien beschrieben. Zusätzlich enthalten diese Folien ein Gleitmittel.

Auf der anderen Seite werden in den Druckschritten DE-A-17 69 028, EP-A-0 021 672, EP-A-0 122 495 und EP-A-0 282 917 gut metallisierbare orientierte Polypropylenfolien (oPP-Folien) beschrieben, die aber für den Dreheinschlag und für die Verarbeitung auf schnelllaufenden Verarbeitungsmaschinen ungeeignet sind.

Die Aufgabe der vorliegenden Erfindung besteht darin, eine transparente biaxial orientierte Mehrschichtfolie mit guten Twisteigenschaften zur Verfügung zu stellen, wobei mindestens eine Oberfläche der Folie ausgezeichnete Hafteigenschaften, insbesondere für die metallische Abscheidung, aufweist.

Die Aufgabe wird durch die Bereitstellung einer metallisierbaren, biaxial orientierten, transparenten Polypropylen-Mehrschichtfolie gelöst, die durch folgende Merkmale gekennzeichnet ist:

a) die Basisschicht enthält neben Polypropylen ein niedrigmolekulares Kohlenwasserstoffharz mit einem Erweichungspunkt von 130-180 °C, bestimmt nach ASTM E28, bevorzugt in einem Anteil von 5-30 %, ausgewählt aus der Gruppe der Styrolharze, Cyclopentadienharze und Terpenharze,

b) die Basis enthält ein Antistatikum in einem Anteil von 0,05-0,1 % und

c) die Deckschicht bzw. die Deckschichten enthalten ein Antiblockmittel in einem Anteil von 0,1-0,5 % und sind frei von jedwedem Gleitmittel,

d) die Folie ist isotrop orientiert und zwar daß

- die Reißdehnung in beiden Richtungen < 100 %
- die bleibende Dehnung in beiden Richtungen >60 % ist und

e) der Glanz der Folie größer als 115 ist.

Als bevorzugtes Polypropylen der Basisschicht wird im Rahmen der vorliegenden Erfindung ein isotaktisches Propylenhomopolymeres eingesetzt oder ein Copolymeres, das zum überwiegenden Anteil aus Propyleneinheiten zusammengesetzt : ist. Solche Polymeren besitzen üblicherweise einen Schmelzpunkt von mindestens 140 °C, bevorzugtvon 150 °C. Isotaktisches Polypropylen mit einem n-heptanlöslichen Anteil von weniger als 15 Gew.-%, Copolymere von Ethylen und Propylen mit einem Ethylengehalt von weniger als 10 Gew.-% und Copolymere von Propylen mit anderen Alphaolefinen mit 4-8 Kohlenstoffatomen und mit einem Gehalt dieser Alphaolefine von weniger als 10 Gew.-% stellen typische Beispiele für das bevorzugte thermoplastische Polypropylen der Basisschicht dar.

Die bevorzugten thermoplastischen Polymeren haben zweckmäßigerweise einen Schmelzflußindex im Bereich von 0,5 g/10 min bis 8 g/10 min bei 230 °C und 21,6 N Belastung (DIN 53 735), insbesondere von 1,5 g/10 min bis 5 g/10 min.

Bei dem in der Basisschicht enthaltenen niedrigmolekularen Harz handelt es sich um ein natürliches oder synthetisches Harz mit einem Erweichungspunkt von 130 bis 180 °C, vorzugsweise 140 bis 160 °C (bestimmt nach ASTM E 28). Unter den zahlreichen niedrigmolekularen Harzen sind die Kohlenwasserstoffharze bevorzugt, und zwar in Form der Erdölharze (diese Harze sind in Ullmanns Encyklopädie der Techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie α-Methylstyrol, Vinyltuluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpen, d.h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind α-Pinen, β-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomerer oder durch Reaktion des polymerisierten Produktes, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils 130 bis 180 °C, vorzugsweise 140 bis 160°C, eingesetzt. Beiden ungesättigten Polymerisaten ist das hydrierte Produkt bevorzugt.

Die wirksame Menge an niedrigmolekularem Harz beträgt 5 bis 30 Gew.-%, vorzugsweise 10 bis 25 Gew.-%, bezogen auf das Gesamtgewicht von Polypropylen und Harz.

Durch die Zugabe von niedermolekularem Harz werden die mechanischen Eigenschaften wie E-Modul und Reißfestigkeit erhöht. Andererseits erniedrigt sich durch die Harzzugabe deutlich die Reißdehnung - die Folie wird spröde. Dies wird für den Dreheinschlag gewünscht.

Von Vorteil ist ein Harz mit einer hohen Erweichungstemperatur, vorzugsweise größer 140 °C. Hierdurch kann die Querstrecktemperatur höher gewählt werden, wodurch der Schrumpf in der Folie kleiner wird. Ein kleiner Schrumpf ist wünschenswert, da ansonsten beim Bedrucken die Folie durch den einsetzenden Schrumpf der Folie auch ihre Drehfähigkeit einbüßt. Eine bevorzugte Querstrecktemperatur bei Einsatz eines solchen Harzes ist 140 - 145 °C. Es wurde beobachtet, daß bei einem Einsatz eines Harzes mit einem niedrigerem Erweichungspunkt, z.B. 120 °C, und bei Verstreckung bei den oben angegebenen Temperaturen die Folie trübe wird.

Zur Verbesserung der Maschinengängigkeit wird die Basisschicht mit einem Antistatikum ausgerüstet und zwar derart, daß die wirksame Menge - bezogen auf die Basisschicht - im Bereich von 0,05 und 0,1 % liegt. Überraschenderweise hat sich gezeigt, daß in diesem Fall die Maschinengängigkeit noch gut ist, andererseits die Metallhaftung durch den an die Oberfläche migrierenden Stoff nicht beeinträchtigt wird.

Ist der Gehalt an Antistatikum wesentlich geringer als 0,05 %, so kann keine ausreichende Menge an Antistatikum an die Oberfläche gelangen, um für einen ausreichenden Schlupf und für eine ausreichende Maschinengängigkeit zu sorgen.

Ist der Anteil wesentlich größer als 0,1 %, so ist zwar die Maschinengängigkeit hervorragend, jedoch verschlechtert sich die Metallhaftung zunehmend.

Bevorzugte Antistatika sind Alkali-alkansulfonate, polyethermodifizierte, d.h. ethoxylierte und/oder propoxylierte Polydiorganosiloxane (Polydialkylsiloxane, Polyalkylenphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-$(C_1$-$C_4)$-alkyl-Gruppen substituiert sind, worunter N,N'-bis(2-hydroxyethyl)-alkylamine mit 10-20, vorzugsweise 12-18 Kohnlenstoffatomen im Alkylteil besonders geeignet sind.

Die Deckschichten können z.B. aus PP-Homopolymer oder aber aus PE/PP-Copolymeren bestehen (PP = Polypropylen; PE = Polyethylen).

Die Deckschichten können daneben ebenfalls mit dem oben beschriebenen niedermolekularen Harz ausgerüstet werden. Dies verbessert vor allem die Optik der Folie.

Die Deckschichtdicke soll so gering wie möglich sein. Es wurde beobachtet, daß je dicker die Deckschichten sind, desto mehr verschlechtert sich die Twistfähigkeit der Folie. Als zweckmäßig haben sich Deckschichtdicken kleiner 0,5 μm erwiesen.

Die Deckschichten sind erfindungsgemäß frei von jedwedem Gleitmittel und enthalten nur ein Antiblockmittel, mit dem eine gute Maschinengängigkeit gewährleistet wird.

Geeignete Antiblockmittel sind anorganische Zusatzstoffe, wie Siliciumdioxid, Calciumcarbonat, Magnesiumsilikat, Aluminiumsilikat, Calciumphosphat und dergleichen oder nichtionische Tenside, anionische Tenside und/oder mit dem Polymer der Schicht unverträgliche organische Polymerisate, wie Polyamide, Polyester, Polycarbonate und dergleichen. Vorzugsweise liegt die wirksame Menge an Antiblockmittel im Bereich von 0,1 bis 0,5 Gew.-%, bezogen auf die Schicht.

Für die Metallisierung ist es zweckmäßig, die Folie druckvorzubehandeln. Im Fall der PP-Deckschicht bietet sich beispielsweise die Flammbehandlung und im Falle der PE/PP-Deckschicht die Flamm- oder die Coronabehandlung an. Die Applizierung beider Methoden erfolgt derart, daß direkt nach der Herstellung der Mehrschichtfolie die zu metallisierende Oberfläche eine Oberflächenspannung von 36-50 mN/m, vorzugsweise 38-42 mN/m aufweist.

Die eingangs genannte Aufgabe der Erfindung wird auch durch ein Verfahren zur Herstellung der vorstehend beschriebenen Folie gelöst. Das erfindungsgemäße Verfahren besteht darin, daß mittels Coextrusion aus einer Breitschlitzdüse zunächst eine Vorfolie hergestellt wird, die auf einer Kühlwalze verfestigt und daran anschließend in Längs- und Querrichtung durch Strekken orientiert wird. Erfindungsgemäß werden die Bedingungen in der Längs- und in der Querrichtung so gewählt, daß die Folie in beiden Richtungen isotrope Eigenschaften hat. Die Voraussetzungen für die Erzielung von sehr guten Twisteigenschaften sind dann besonders günstig. Weiterhin hat sich gezeigt, daß die Drehfähigkeit umso besser wird, je höher die Folie längsverstreckt ist.

Die erfindungsgemäßen Längsstreckverhältnisse sind 6-9, vorzugsweise 6,5-8,0. Dementsprechend sind auch die Querstreckverhältnisse zu wählen. Vorzugsweise ergibt sich hier ein Bereich von 6,5-8,0. Eine hohe Querverstreckung - wie dies bei Verpackungsfolien gemäß Stand der Technik der Fall ist- hat sich für den Einsatz der Folien als Dreheinschlagfolie als nachteilig erwiesen. Die Anwendung von einem Längsstreckverhältnis von $\lambda_l = 5$ und einem Querstreckverhältnis von $\lambda_q = 10$ ergibt - auch bei der Zugabe von hohen Harzmengen - eine Folie mit schlechter Twistfähigkeit.

Die Twistfähigkeit der Folie kann sehr gut durch zwei physikalische Größen beschrieben werden: Die Twistfähigkeit ist umso besser, je größer die bleibende Dehnung und je kleiner die Reißdehunung ist. Die Werte für diese physikalischen Größen sollten in beiden Richtungen etwa gleich groß sein.

Eine gute Twistfähigkeit ist gegeben, wenn die bleibenden Dehnwerte für beide Richtungen über 60 % sind.

Die erfindungsgemäßen Folien haben Reißdehnwerte in beiden Richtungen von kleiner 100 %, vorzugsweise kleiner 90 % (die Reißdehnung wird - wie der E-Modul und die Reißfestigkeit - nach DIN 53 455 bestimmt). Beide Messwerte (Reißdehnung und bleibende Dehnung) sollten sich bevorzugt max. 10 % voneinander unterscheiden.

Die optischen Eigenschaften der erfindungsgemäßen Folien sind überraschenderweise hervorragend. Der Glanzwert liegt über 110, vorzugsweise über 120, bestimmt nach DIN 67 530 bei einem Meßwinkel von 20°. Die Trübung ist kleiner 2%, bestimmt nach Gardner (ASTM D 1003-52).

Auch die niedrigen Schrumpfwerte der erfindungsgemäßen Folien tragen zu einer Verbesserung gegenüber Folien gemäß Stand der Technik bei.

Die bei der Metallisierung auf mindestens eine Oberflächenschicht aufgebrachte Metallschicht kann aus jedem geeigneten Metall bestehen. Bevorzugt sind Schichten aus Aluminium, Zink, Gold oder Silber oder aus entsprechenden Legierungen, wobei Aluminium oder aluminiumhaltige Legierungen besonders bevorzugt sind. Als geeignete Metallisierungsverfahren seien die Elektroplattierung, das Besputtern und die Vakuumbedampfung genannt, wobei die Vakuumbedampfung bevorzugt ist.

Die Dicke der Metallschicht beträgt etwa 20 bis 600 nm, vorzugsweise 25 bis 100 nm.

Nachfolgend wird die Erfindung anhand eines Beispiels näher erläutert.

Beispiel: 1

Es wurde durch Coextrusion und anschließender stufenweiser Orientierung in Längs-und in Querrichtung eine dreischichtige Folie mit einer Gesamtdicke von 25 µm hergestellt. Die Deckschichten hatten eine Dicke von jeweils 0,4 µm.

Zusammensetzung der Basisschicht (A-Schicht):

| | |
|---|---|
| 79,92 Gew.-% | isotaktisches Polypropylen |
| 20 Gew.-% | hydriertes Cyclopentadienharz mit einer Erweichungstemperatur von 140 °C ($^{(R)}$Escoroz ECR 356, Exxon) |
| 0,08 Gew.-% | N,N-bis(2-hydroxyethyl)-($C_{12}$-$C_{18}$)alkylamin |

Der Schmelzindex der Mischung beträgt $I_2 = 10$ g/10 min bzw. $I_5 = 50$ g/10 min

Zusammensetzung der Deckschichten (B-Schichten):

| | |
|---|---|
| 99,2 Gew.-% | statistisches Ethylen-Propylen-Copolymeres mit einem $C_2$-Gehalt von 4,5 Gew.-% |
| 0,3 Gew.-% | $SiO_2$ als Antiblockmittel mit einer mittleren Teilchengröße von 3 µm |

Der Schmelzindex der Deckschicht beträgt $I_2 = 12$ g/10 min bzw. $I_5 = 60$ g/10 min

Die Herstellungsbedingungen in den einzelnen Verfahrensschritten sind:

| | |
|---|---|
| Extrusion: | Temperatur der A-Schicht: 190°C |
| | Temperatur der B-Schicht: 270°C |
| | Temperatur der Abzugswalze: 30°C |
| Längsstreckung: | Temperatur T = 110 °C |
| | Längsstreckverhältnis $\lambda_l = 6,5$ |
| Querstreckung: | Temperatur T = 140 °C |
| | Querstreckverhältnis $\lambda_q = 7,3$ |
| | Konvergenz 15 % |
| Fixierung: | Temperatur T = 110 °C |

Die auf diese Weise hergestellte Folie hat die in der Tabelle aufgelisteten Eigenschaften. Die Folie wurde vor der Aufrollung einer Coronabehandlung (10 kHz, 10 kV) unterzogen, um eine Bedruckbarkeit zu gewährleisten. Die Oberflachenspannung der Folie infolge dieser Behandlung beträgt 40 mN/m.

Der Schrumpf wird nach Lagerung der Folie in einem Umluftofen bei 120 °C und einer Verweilzeit von 15 min gemessen.

Zur Messung der bleibenden Dehnung wurde aus der Folie ein 15 mm breiter Folienstreifen quer zur Maschinenrichtung geschnitten und in eine Zugprüfmaschine eingespannt, wobei die Einspannlänge 200 mm betrug. Die Probe wurde dann mit 20 mm/min entsprechend 10 %/min gedehnt. Nach einer Dehnung von 10 %, d.h. bei einer Probenlänge von 220 mm, wurde die Probe automatisch mit gleicher Geschwindigkeit entspannt. Die Bestimmung der bleibenden Dehnung erfolgt aus einem Kraft-Dehnungs-Diagramm. Die bleibende Dehnung berechnet sich dabei gemäß

$$D_b = \frac{x\,\%}{10\,\%} \cdot 100\,\%$$

In der Tabelle bedeutet

+ + : sehr gut

Tabelle 1

| Beispiel | bl.Dehnung % | | E-Modul N/mm² | | Reißfestigkeit N/mm² | | Reißdehnung % | | Schrumpf % | | Glanz | Trübung % | Güte des Dreheinschlags |
|---|---|---|---|---|---|---|---|---|---|---|---|---|---|
| | längs | quer | längs | quer | längs | quer | längs | quer | längs | quer | | | |
| Beispiel 1 | 61 | 62 | 3200 | 3400 | 205 | 215 | 95 | 78 | 11 | 7 | 118 | 1,5 | ++ |

**Patentansprüche**

1. Metallisierbare biaxial orientierte transparente Mehrschichtfolie aus Polypropylen mit einer Basis- und mindestens einer Deckschicht, dadurch gekennzeichnet, daß

    a) die Basisschicht ein niedrigmolekulares Kohlenwasserstoffharz mit einem Erweichungspunkt von 130-180° C bestimmt nach ASTM E 28 ausgewählt aus der Gruppe der Styrolharze Cyclopentadienharze und Terpenharze enthält, und
    b) die Basisschicht ein Antistatikum in einem Anteil von 0,05-0,1 Gew.-% enthält und
    c) die Deckschicht oder die Deckschichten ein Antiblockmittel mit einem mittleren Partikeldurchmesser von 1-4 $\mu$m in einem Anteil von 0,1-0,5 Gew.-% enthält/enthalten und frei von Gleitmittel sind, und
    d) die Folie isotrop orientiert ist und zwar derart, daß

    - die Reißdehnung in Längs- und in Querrichtung <100 %
    - die bleibende Dehnung in Längs- und in Querrichtung >60 % ist und

    e) der Glanz der Folie größer als 115 ist.

2. Metallisierbare biaxial orientierte transparente Mehrschichtfolie nach Anspruch 1, dadurch gekennzeichnet, daß die Basisschicht 5 bis 30 Gew.-% Kohlenwasserstoffharz, bezogen auf das Gewicht der Basisschicht, enthält.

3. Metallisierbare biaxial orientierte transparente Mehrschichtfolie nach einem oder mehreren der Ansprüche 1 und/oder 2, dadurch gekennzeichnet, daß das Antistatikum ein N,N-bis--hydroxy-(C $_1$-C$_{12}$)-alkyl-N-(C$_{12}$-C$_{18}$)-alkylamin oder eine Mischung aus verschiedenen dieser Alkylamine ist.

4. Metallisierbare biaxial orientierte transparente Mehrschichtfolie nach einem oder mehreren der Ansprüche 1 bis 3, dadurch gekennzeichnet, daß die Deckschicht oder die Deckschichten aus einem Polypropylen-Homopolymeren und/oder einem Ethylen/Propylen-Copolymeren bestehen.

5. Metallisierbare biaxial orientierte transparente Mehrschichtfolie nach einem oder mehreren der Ansprüche 1 bis 4, dadurch gekennzeichnet, daß die Deckschicht oder die Deckschichten ein niedrigmolekulares Kohlenwasserstoffharz ausgewählt aus der Gruppe der Styrolharze, Cyclopentadienharze und Terpenharze enthält/ enthalten.

6. Metallisierbare biaxial orientierte transparente Mehrschichtfolie nach einem oder mehreren der Ansprüche 1 bis 5, dadurch gekennzeichnet, daß die Dicke der Deckschicht oder der Deckschichten

kleiner 0,5 $\mu$m ist.

7. Metallisierbare biaxial orientierte transparente Mehrschichtfolie nach einem oder mehreren der Ansprüche 1 bis 6, dadurch gekennzeichnet, daß das Antiblockmittel Siliciumdioxid ist.

8. Metallisierbare biaxial orientierte transparente Mehrschichtfolie nach einem oder mehreren der Ansprüche 1 bis 7, dadurch gekennzeichnet, daß die Oberflächenspannung der zu metallisierenden Oberfläche 36 bis 50 mN/m beträgt.

9. Metallisierbare biaxial orientierte transparente Mehrschichtfolie nach einem oder mehreren der Ansprüche 1 bis 8, dadurch gekennzeichnet, daß die Reißdehnung und die bleibende Dehnung sich um nicht mehr als 10 % unterscheiden.

10. Verfahren zur Herstellung einer Mehrschichtfolie nach einem oder mehreren der Ansprüche 1 bis 9, dadurch gekennzeichnet, daß man die den einzelnen Schichten der Mehrschichtfolie entsprechenden Schmelzen durch eine Breitschlitzdüse coextrudiert, die so erhaltene Folie auf einer Kühlwalze verfestigt und daran anschließend in Lägs- und Querrichtung durch Strecken so orientiert, daß die Folie in beiden Richtungen isotrope Eigenschaften hat und dann gegebenenfalls eine oder beide Seiten der Mehrschichtfolie oberflächenbehandelt.

11. Verfahren nach Anspruch 10, dadurch gekennzeichnet, daß die Folie in Längs- und in Querrichtung um den Faktor 6 - 9 gestreckt wird.

12. Metallisierte, biaxial orientierte transparente Mehrschichtfolie, gekennzeichnet durch eine metallisierbare Mehrschichtfolie gemäß einem oder mehrerer der Ansprüche 1 bis 9, wobei mindestens eine Deckschicht mit einem Metall metallisiert ist.

13. Verwendung einer metallisierbaren Merhrschichtfolie nach einem oder mehreren der Ansprüche 1 bis 9 als Verpackungsfolie.

14. Verwendung einer metallisierbaren Merhrschichtfolie nach einem oder mehreren der Ansprüche 1 bis 9 für den Dreheinschlag.

15. Verwendung einer metallisierten Mehrschichtfolie nach Anspruch 12 als Verpackungsfolie.

16. Verwendung einer metallisierten Mehrschichtfolie nach Anspruch 12 für den Dreheinschlag.

**Claims**

1. A metallizable, biaxially oriented, transparent, multilayer film made from polypropylene having a base layer and at least one outer layer, wherein

a) the base layer contains a low-molecular-weight hydrocarbon resin having a softening point of 130-180°C, determined in accordance with ASTM E 28, selected from the group consisting of styrene resins, cyclopentadiene resins and terpene resins, and

b) the base layer contains an antistatic in a proportion of 0.05-0.1% by weight, and

c) the outer layer or outer layers contains/contain an antiblocking agent having a mean particle diameter of 1-4 μm in a proportion of 0.1-0.5% by weight and are free from lubricants, and

d) the film is isotropically oriented in such a manner that

- the elongation at break in the longitudinal and transverse directions is <100% and
- the residual elongation in the longitudinal and transverse directions is >60%, and

e) the gloss of the film is greater than 115.

2. A metallizable, biaxially oriented, transparent, multilayer film as claimed in claim 1, wherein the base layer contains from 5 to 30% by weight of hydrocarbon resin, based on the weight of the base layer.

3. A metallizable, biaxially oriented, transparent, multilayer film as claimed in one or more of claims 1 and/or 2, wherein the antistatic is an N,N-bis-ω-hydroxy-($C_1$-$C_4$)-alkyl-N-($C_{12}$-$C_{18}$)-alkylamine or a mixture of various alkylamines of this type.

4. A metallizable, biaxially oriented, transparent, multilayer film as claimed in one or more of claims 1 to 3, wherein the outer layer or outer layers comprise a polypropylene homopolymer and/or an ethylene-propylene copolymer.

5. A metallizable, biaxially oriented, transparent, multilayer film as claimed in one or more of claims 1 to 4, wherein the outer layer or outer layers contains/contain a low-molecular-weight hydrocarbon resin selected from the group consisting of syrene resins, cyclopentadiene resins and terpene resins.

6. A metallizable, biaxially oriented, transparent, multilayer film as claimed in one or more of claims 1 to 5, wherein the thickness of the outer layer or outer layers is less than 0.5 μm.

7. A metallizable, biaxially oriented, transparent, multilayer film as claimed in one or more of claims 1 to 6, wherein the antiblocking agent is silicon dioxide.

8. A metallizable, biaxially oriented, transparent, multilayer film as claimed in one or more of claims 1 to 7, wherein the surface tension of the surface to be metallized is from 36 to 50 mN/m.

9. A metallizable, biaxially oriented, transparent, multilayer film as claimed in one or more of claims 1 to 8, wherein the elongation at break and the residual elongation do not differ by more than 10%.

10. A process for the production of a multilayer film as claimed in one or more of claims 1 to 9, which comprises coextruding the melts corresponding to the individual layers of the multilayer film through a flat film die, solidifying the resultant film on a chill roll, and subsequently orienting the film in the longitudinal and transverse directions by stretching in such a manner that the film has isotropic properties in both directions, and then, if desired, surface-treating one or both sides of the multilayer film.

11. The process as claimed in claim 10, wherein the film is stretched in the longitudinal and transverse directions by a factor of 6 - 9.

12. A metallized, biaxially oriented, transparent, multilayer film, wherein at least one outer layer of a metallizable, multilayer film as claimed in one or more of claims 1 to 9 has been metallized.

13. The use of a metallizable, multilayer film as claimed in one or more of claims 1 to 9 as a packaging film.

14. The use of a metallizable, multilayer film as claimed in one or more of claims 1 to 9 for twist wrapping.

15. The use of a metallized, multilayer film as claimed in claim 12 as a packaging film.

16. The use of a metallized, multilayer film as claimed in claim 12 for twist wrapping.

**Revendications**

1. Feuille multicouche transparente, à orientation biaxiale, métallisable, en polypropylène, comportant une couche de base et au moins une couche extérieure, caractérisée en ce que :

a) la couche de base contient une résine hydrocarbonée de bas poids moléculaire ayant un point de ramollissement de 130 à 180°C, déterminé selon la norme ASTM E-28, prise dans le groupe comportant des résines styréniques, des résines cyclopentadiéniques et des résines terpéniques, et

b) la couche de base contenant un antistatique dans un taux de 0,05 à 0,1 % en poids, et

c) la couche extérieure ou les couches extérieures contenant un agent anti-bloquant ayant une granulométrie moyenne de 1 à 4 μm dans un taux de 0,1 à 0,5 % et ne contenant pas de lubrifiant, et

d) la feuille ayant une orientation isotrope et cela de façon telle que

- l'allongement à la rupture dans le sens de la longueur et dans le sens de la largeur soit < 100 %,
- l'allongement résiduel dans le sens de la longueur et dans le sens de la largeur soit > 60 %, et

e) le brillant de la feuille est supérieur à 115.

2. Feuille multicouche transparente, à orientation biaxiale, métallisable, selon la revendication 1, caractérisée en ce que la couche de base contient de 5 à 30 % en poids de résine hydrocarbonée par rapport au poids de la couche de base.

3. Feuille multicouche transparente, à orientation biaxiale, métallisable, selon une ou plusieurs des revendications 1 et/ou 2, caractérisé en ce que l'antistatique est une N,N-bis-hydroxy-(alkyle en $C_1$-$C_4$)-N-(alkyle en $C_{12}$-$C_{18}$)amine ou un mélange de différentes alkylamines de ce type.

4. Feuille multicouche transparente, à orientation biaxiale, métallisable, selon une ou plusieurs des revendications 1 à 3, caractérisée en ce que la couche extérieure ou les couches extérieures sont constituées d'un homopolymère du polypropylène et/ou d'un copolymère de l'éthylène/propylène.

5. Feuille multicouche transparente, à orientation biaxiale, métallisable, selon une ou plusieurs des revendications 1 à 4, caractérisée en ce que la couche extérieure ou les couches extérieures contiennent une résine hydrocarbonée de bas poids moléculaire prise dans le groupe des résines styréniques, des résines cyclopentadiéniques et des résines terpéniques.

6. Feuille multicouche transparente, à orientation biaxiale, métallisable, selon une ou plusieurs des revendications 1 à 5, caractérisée en ce que l'épaisseur de la couche extérieure ou des couches extérieures est inférieure à 0,5 μm.

7. Feuille multicouche transparente, à orientation biaxiale, métallisable, selon une ou plusieurs des revendications 1 à 6, caractérisée en ce que l'agent antibloquant est le dioxyde de silicium.

8. Feuille multicouche transparente, à orientation biaxiale, métallisable, selon une ou plusieurs des revendications 1 à 7, caractérisée en ce que la tension superficielle de la surface à métalliser est de 36 à 50 mN/m.

9. Feuille multicouche transparente, à orientation biaxiale, métallisable, selon une ou plusieurs des revendications 1 à 8, caractérisée en ce que l'allongement à la rupture et l'allongement résiduel ne diffèrent pas plus l'un de l'autre que de 10 %.

10. Procédé pour la préparation d'une feuille multicouche selon une ou plusieurs des revendications 1 à 9, caractérisé en ce qu'on coextrude les masses fondues correspondant aux couches individuel les de la feuille multicouche à l'aide d'une filière plate, on consolide la feuille ainsi obtenue sur un cylindre refroidissant et ensuite, on oriente la feuille par étirage dans le sens de la longueur et dans le sens transversal de façon telle que la feuille ait des caractéristiques isotropes dans les deux sens et ensuite éventuellement on traite la surface de l'un ou des deux côtés de la feuille multicouche.

11. Procédé selon la revendication 10, caractérisé en ce qu'on étire la feuille dans le sens de la longueur et dans le sens transversal d'un facteur de 6 à 9.

12. Feuille multicouche transparente à orientation biaxiale métallisée, caractérisée en ce qu'on métallise une feuille multicouche métallisable selon une ou plusieurs des revendications 1 à 9 sur au moins l'une des couches extérieures par un métal.

13. Utilisation d'une feuille multicouche métallisable selon une ou plusieurs des revendications 1 à 9, comme feuille d'emballage.

14. Utilisation d'une feuille multicouche métallisable selon une ou plusieurs des revendications 1 à 9, pour le marquage par détourage.

15. Utilisation d'une feuille multicouche métallisée selon la revendication 12, comme feuille d'emballage.

16. Utilisation d'une feuille multicouche métallisée selon la revendication 12, pour le marquage par détourage.